Europäisches Patentamt

European Patent Office

Office européen des brevets

(19)

(11) Numéro de publication : **0 054 469**
**B1**

(12) **FASCICULE DE BREVET EUROPÉEN**

(45) Date de publication du fascicule du brevet :
13.03.85

(21) Numéro de dépôt : 81401922.0

(22) Date de dépôt : 03.12.81

(51) Int. Cl.⁴ : **B 60 T 11/34, F 16 D 65/24**

(54) **Frein à tambour à couple régulé.**

(30) Priorité : 11.12.80 FR 8026283

(43) Date de publication de la demande :
23.06.82 Bulletin 82/25

(45) Mention de la délivrance du brevet :
13.03.85 Bulletin 85/11

(84) Etats contractants désignés :
DE GB IT

(56) Documents cités :
DE-C- 713 937
FR-A- 1 360 523
FR-A- 2 426 182
FR-A- 2 447 305
FR-A- 2 466 674
GB-A- 1 001 279
GB-A- 1 059 485
US-A- 3 047 099
US-A- 3 349 875

(73) Titulaire : SOCIETE ANONYME D.B.A.
Centre Paris Pleyel
F-93521 St-Denis Cédex 01 (FR)

(72) Inventeur : Riquart, Christian
34 bis, Avenue Gaston Bourry
F-95740 Frépillon (FR)
Inventeur : Volan, Gérard
1, rue de Bretagne
F-78140 Vélizy (FR)
Inventeur : Pressaco, Pierre
45, rue E. Zola
F-93120 La Courneuve (FR)

(74) Mandataire : Poidatz, Emmanuel et al
Service Brevets Bendix 44 rue François 1er
F-75008 Paris (FR)

EP 0 054 469 B1

Jouve, 18, rue St-Denis, 75001 Paris, France

## Description

L'invention a pour objet un frein à tambour à couple de freinage régulé, notamment pour véhicule automobile.

L'invention concerne généralement un frein à tambour comprenant deux segments susceptibles d'engendrer un couple de freinage par engagement de friction avec un tambour tournant sous l'action d'un moteur de frein.

L'invention concerne particulièrement une valve de régulation de couple pouvant être utilisée dans un tel frein.

On sait qu'un frein à tambour présente un certain nombre d'inconvénients, en particulier le couple de freinage obtenu pour un effort de commande donné dépend entre autre de la qualité du matériau de friction, de la température, des conditions atmosphériques et de l'état de surface de la piste de frottement du tambour. Malgré le soin apporté dans la sélection des matériaux de friction pour obtenir un couple de freinage aussi stable et aussi fidèle que possible, ce problème n'est pas totalement résolu. En effet, un frein associé à un tambour dont la piste de frottement présente une rugosité élevée fournira pour une pression donnée un couple supérieur au couple que le même frein aurait fourni en association avec un tambour dont la piste présente une rugosité faible. Ces variations non contrôlées de couple pour une pression de commande donnée peuvent entraîner une instabilité du véhicule pendant le freinage, du fait que deux freins d'un même essieu peuvent présenter des couples de freinage sensiblement différents, ou bien que deux freins d'un même essieu présentent des couples suffisamment différents des couples nominaux prévus pour que l'équilibre entre essieux soit rompu ; cette instabilité étant susceptible dans les cas extrêmes d'entraîner la perte du contrôle du véhicule.

On a déjà essayé de résoudre ce problème en réalisant un asservissement du couple mesuré sur les segments en fonction d'une pression de commande par un système de contre-pression. L'utilisation de la contre-pression dans le moteur de frein ayant pour résultat de s'opposer à la force d'actionnement développée par le moteur de frein (voir en particulier le brevet US 3 047 099 déposé le 17 novembre 1958 par Edwin A. Dahle). La solution proposée présente néanmoins les inconvénients d'une plage de régulation limitée et d'un encombrement important.

Il a été également proposé dans le brevet US-A-3 349 875 déposé le 25 juin 1965 par W. Stelzer d'introduire une valve d'isolement insérée entre un orifice d'entrée et un moteur de frein, la valve étant commandée par une partie mobile maintenue en équilibre entre la pression d'entrée et des moyens d'actionnement liés à un segment et représentatifs du couple engendré par le frein. Si le dispositif proposé est à même de limiter le couple de freinage excessif par fermeture de la valve d'isolement et s'il est à même d'accroître la pression dans le moteur de frein si l'efficacité de celui-ci décroît, il ne peut néanmoins diminuer la pression régnant dans le moteur de frein si le couple de freinage continue à croître après la fermeture de la valve d'isolement comme cela se produit du fait de l'échauffement des garnitures en cours de freinage ou du fait d'un auto-serrage initial dû à des effets dynamiques lors de l'application du frein.

Par rapport à l'art antérieur notre système propose une valve de régulation de couple comportant une valve d'isolement et une chambre de décompression à volume variable qui effectuent une régulation automatique de la pression de travail admise dans le moteur de frein en fonction du couple effectivement engendré par le frein.

L'invention a pour objet un frein à tambour du type comportant deux segments actionnés par un moteur hydraulique de frein et un orifice d'entrée de fluide destiné à être raccordé à une source de pression de commande, ledit frein comportant une valve de régulation de couple définie dans un corps fixe abritant une valve d'isolement insérée entre ledit orifice d'entrée et ledit moteur de frein, ladite valve d'isolement étant commandée par une partie mobile notamment maintenue en équilibre entre des premiers moyens d'actionnement liés à l'un desdits segments et des seconds moyens d'actionnement sensibles à une pression de commande établie audit orifice d'entrée, caractérisé en ce que ladite valve de régulation abrite une chambre de décompression à volume variable en communication permanente avec ledit moteur de frein et communiquant avec ledit orifice d'entrée par l'intermédiaire de ladite valve d'isolement, les variations de volume de ladite chambre étant obtenues par le déplacement de ladite partie mobile, le déplacement dans le sens d'une fermeture de la valve d'isolement correspond à une augmentation du volume de ladite chambre et peut se poursuivre après la fermeture de ladite valve d'isolement.

L'invention enseigne également de pouvoir augmenter le diamètre du moteur de frein de manière à ce que celui-ci puisse fournir le couple désiré même si les éléments de friction présentent une baisse du coefficient de friction entraînant une baisse de l'efficacité du frein. L'augmentation du diamètre du moteur de frein sera définie par la limite inférieure prévisible de la baisse de l'efficacité du frein.

Dans les modes de réalisation de la présente invention, le frein comporte une valve de régulation du couple, pour au moins un desdits segments, capable de contrôler la pression dans le moteur de frein pour obtenir un couple de freinage proportionnel à la pression de commande dans les limites définies lors du dimensionnement des différents éléments du frein.

En outre, le circuit hydraulique n'est pas modifiée, de plus aucune modification n'intervient sur la partie fixe du véhicule recevant la plaque support de frein. On remarquera que l'encombrement du frein n'est pas affecté.

On décrira maintenant à titre d'exemple non limitatif trois modes de réalisation en se référant aux figures annexées dans lesquelles les figures 1 à 3 représentent un mode de réalisation, les figures 4 et 5 un deuxième mode de réalisation et les figures 6 à 8 un troisième mode de réalisation :

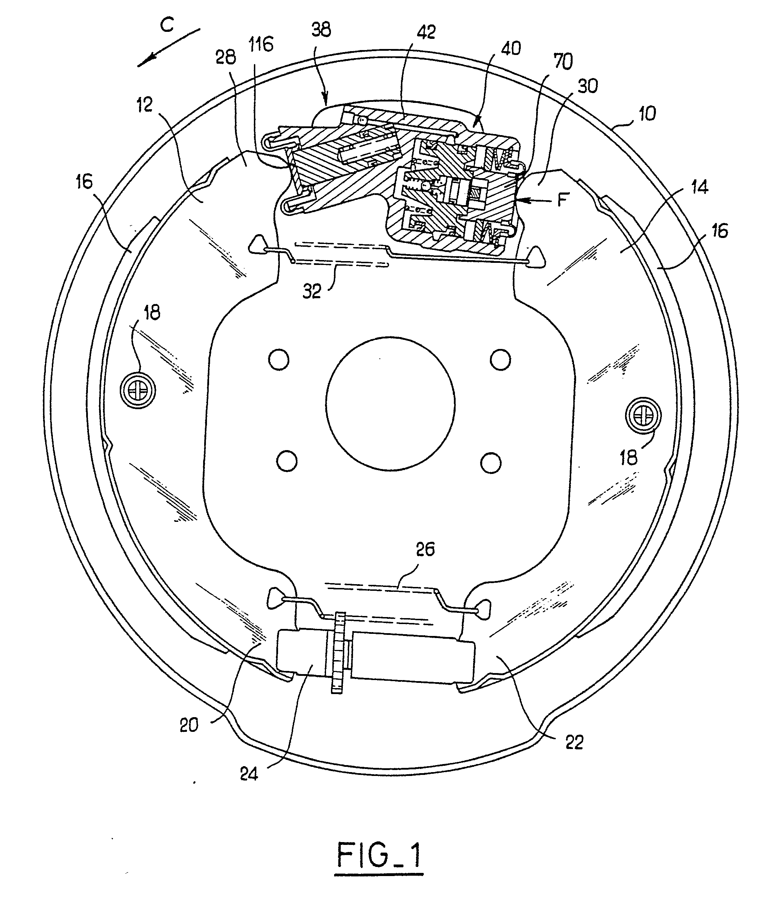

— la figure 1 est une vue de face d'un frein à tambour du type duo-servo réalisé conformément à l'invention, dont certaines parties sont représentées en coupe ;

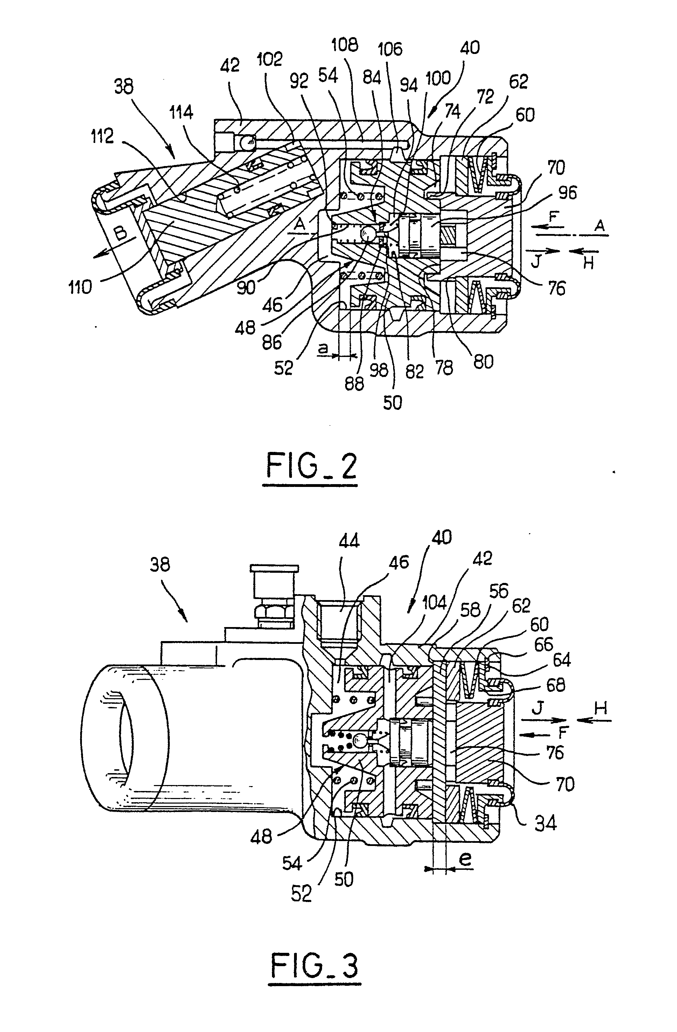

— la figure 2 est une vue en coupe agrandie de la valve de régulation de couple représentée sur la figure 1 ;

— la figure 3 est une vue en coupe partielle agrandie de la valve de régulation de couple suivant la ligne A-A de la figure 2 ;

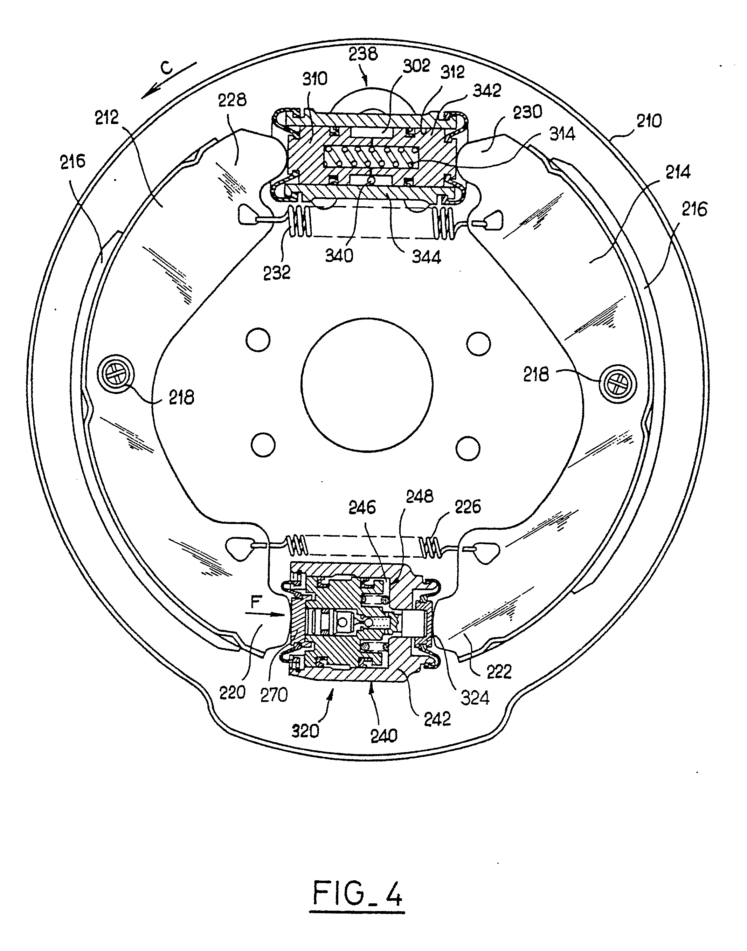

— la figure 4 est une vue de face d'un frein à tambour du type à deux segments flottants suivant un deuxième mode de réalisation et comportant des coupes partielles ;

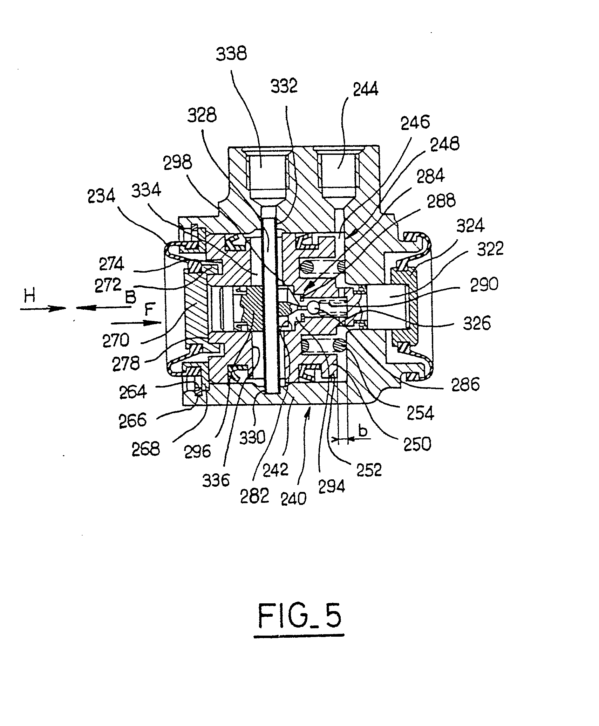

— la figure 5 est une vue en coupe agrandie de la valve de régulation de couple de la figure 4 ;

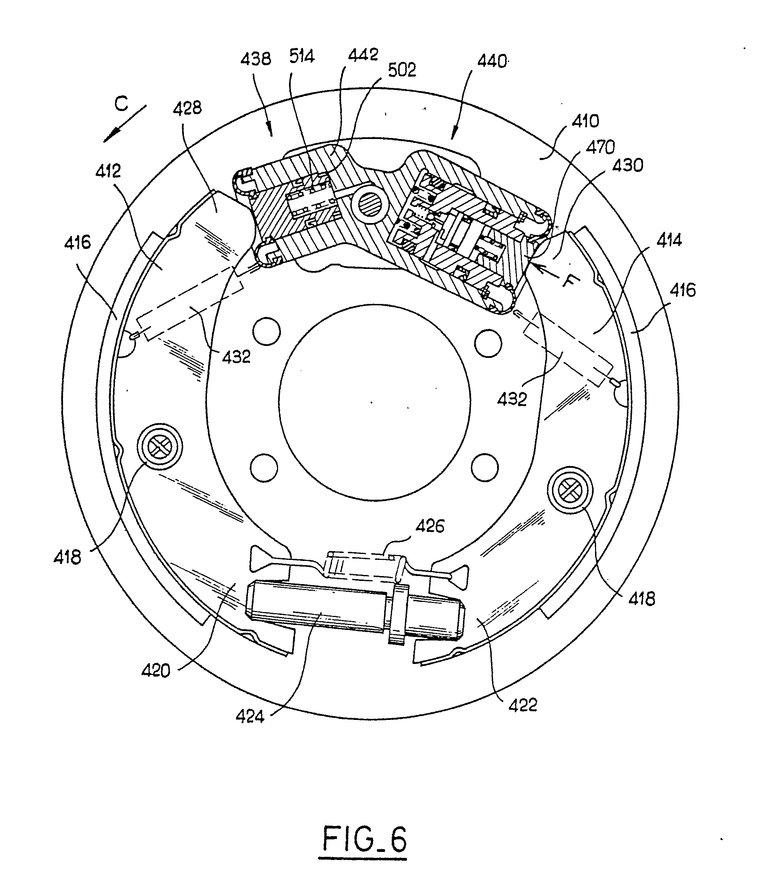

— la figure 6 est une vue de face d'un frein à tambour du type duo-servo selon un troisième mode de réalisation et présentant en coupe la valve de régulation de couple ;

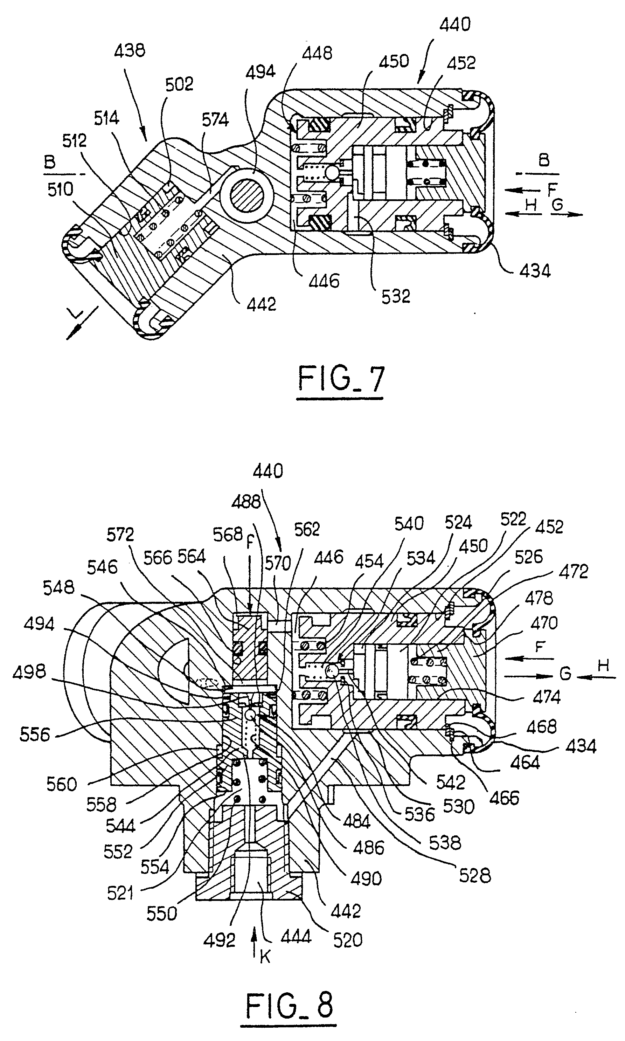

— la figure 7 est une vue en coupe agrandie de la valve de régulation de couple de la figure 6 ; et

— la figure 8 est une vue en coupe agrandie de la valve de régulation de couple de la figure 6 suivant la ligne B-B de la figure 7.

Le frein à tambour représenté sur les figures 1 à 3 comporte une plaque support de frein 10 prévue pour être associée à une partie fixe du véhicule (non représentée). Cette plaque support 10 reçoit en coulissement deux segments 12 et 14 comportant sur leur périphérie un matériau de friction 16 maintenu sur les segments au moyen de rivets ou équivalents (non représentés). Les segments 12 et 14 sont maintenus appliqués sur la plaque support 10 au moyen de ressorts 18. Les extrémités 20 et 22 respectivement des segments 12 et 14 sont maintenues appliquées sur une entretoise 24 au moyen d'un ressort 26. L'entretoise 24 est libre de se déplacer par rapport à la plaque support 10. Les deux autres extrémités 28 et 30 respectivement des segments 12 et 14 sont appliquées au moyen d'un ressort 32 respectivement sur un moteur de frein 38 et une valve de régulation de couple 40. Le moteur de frein 38 et la valve de régulation 40 sont réalisés dans un même corps 42 fixé sur la plaque support 10. Le segment 12 est disposé de manière à entrer en engagement de friction avec un tambour tournant dans le sens de la flèche C (non représenté) sous l'action du moteur de frein 38. Par réaction au travers de l'entretoise 24, le segment 14 est également sollicité en engagement de friction sur le tambour tournant (non représenté). La force de réaction, représentative du couple engendré par l'engagement de friction est transmise par le segment 14, plus précisément par son extrémité 30, à la valve de régulation 40.

La valve de régulation de couple 40 comporte une butée hydraulique 48 formée d'un piston principal 50 monté coulissant dans un alésage 52 du corps 42 et d'une chambre de réaction 46 définie entre le piston 50 et le fond de l'alésage 52.

Tel que montré sur les figures 2 et 3, le corps 42 porte un orifice d'entrée 44, susceptible d'être relié à une source de pression de commande telle que, par exemple, le maître-cylindre d'un véhicule (non représenté), qui débouche dans la chambre de réaction 46. Le piston principal 50 est sollicité dans le sens de la flèche J, par un ressort 54 en appui sur le fond de l'alésage 52, vers la position de repos (c'est-à-dire lorsque le frein est relâché) contre une butée mécanique. Cette butée mécanique comporte un barreau 56 maintenu en appui, par l'intermédiaire d'une rondelle 62, d'un ressort 60 et d'une rondelle 68, sur un circlips 64 monté dans une gorge 66 du corps 42, le ressort 60 ayant un effort supérieur à l'effort du ressort 54 maintient le barreau 56 en appui sur une saillie 58 du corps 42. Le piston principal, sur sa face opposée à la chambre de réaction 46, est en contact par une surface 78, avec une pièce d'appui 70, centrée sur le piston principal au moyen de deux saillies 72 montées dans un dégagement 74 dudit piston. La pièce d'appui 70 comporte un embrèvement diamétral 76 d'une profondeur supérieure à la somme de l'épaisseur « e » du barreau 56 et de la distance « a » définie entre le piston principal 50 en position de repos et le fond de la chambre de réaction 46. La pièce d'appui 70 coopère, par sa face opposée au piston principal 50, avec l'extrémité 30 du segment 14 (voir Figure 1). La pièce d'appui 70 comporte deux saillies 80 susceptibles de venir en appui sur la rondelle 62 pour interdire à la pièce d'appui 70 de se désolidariser du piston principal 50. Un capuchon de protection 34 en matériau élastique est monté entre la pièce d'appui 70 et la rondelle 68.

Une valve d'isolement 84 est montée dans le piston principal 50 coaxialement à celui-ci. La valve d'isolement 84 est formée d'une bille 86 susceptible de venir en appui sur un siège 88 défini sur le piston 50 sous l'action d'un ressort 90 prenant appui sur une saillie 92 du piston principal 50. La valve d'isolement 84 est en communication d'une part avec la chambre de réaction 46 et donc avec l'orifice d'entrée 44 et d'autre part avec une chambre de décompression 94 formée entre le piston principal 50 et un piston auxiliaire 96 monté dans un alésage 82 formé dans le piston principal 50 et coaxial à celui-ci. Le piston auxiliaire 96 porte sur une de ses extrémités un poussoir 98 maintenant la bille 86 en éloignement de son siège 88 lorsque le piston principal 50 est dans sa position de repos. Un ressort 100 prenant appui sur le piston principal 50 maintient le piston auxiliaire 96 en appui sur le barreau 56.

Le moteur de frein 38 comporte un piston de travail 110 monté coulissant dans un alésage 112 du corps 42 et définissant avec le fond dudit alésage une chambre de travail 102. La chambre 102 est reliée à la chambre de décompression 94 de la valve 40 au moyen d'un passage 108 réalisé dans le corps 42 et débouchant dans une gorge circulaire 106 réalisée dans le même corps 42 ; dans cette gorge 106 débouche également un passage diamétral 104 formé dans le piston 50 et relié à la chambre de décompression 94. Le piston 110 est en contact par sa face opposée à la chambre de travail 102, avec une pièce d'appui 116, elle-même en appui sur le segment 12 (voir Figure 1) sous l'action d'un ressort 114 prenant appui d'une part sur le corps 42 et d'autre part sur le fond d'un dégagement pratiqué dans le piston 110.

L'alésage 82 du piston principal 50 et le fond de cet alésage 82 placé en vis-à-vis du piston auxiliaire 96 forment, comme le verra plus précisément lors de la description du fonctionnement, une partie mobile de la chambre de décompression 94. Cette partie mobile est sollicitée d'une part par des premiers moyens d'actionnement formés par le piston principal en contact avec le segment 14 au travers de la pièce d'appui 70 et d'autre part par des seconds moyens d'actionnement formés par le piston principal 50 sensible à la pression régnant dans la chambre de réaction 46.

Le frein à tambour qui vient d'être décrit en se référant aux figures 1 à 3 fonctionne de la façon suivante :

Au repos, lorsqu'aucune pression de commande n'est appliquée à l'orifice d'entrée 44, les différents éléments constituant le frein occupent les positions représentées sur les figures.

Lorsqu'une pression de commande est appliquée dans la chambre de réaction 46 à travers l'orifice 44, celle-ci est également appliquée au piston de travail 110 par l'intermédiaire de la valve d'isolement 84 ouverte, de la chambre de décompression 94 puis par le passage 104, la gorge 106, le passage 108 et la chambre de travail 102. Lorsque la pression de commande et donc la pression de travail régnant dans la chambre 102 est suffisante pour vaincre l'effort du ressort 32, le piston 110 coulisse dans son alésage 112 dans la direction de la flèche B pour solliciter le segment 12 en engagement de friction contre un tambour (non représenté) tournant dans le sens de la flèche C. Par réaction au travers de l'entretoise 24, le segment 14 est également sollicité en engagement de friction. La force de réaction F de friction du segment 14 est appliquée à la pièce d'appui 70 et donc au piston principal 50. Lorsque la force F devient supérieure à la force engendrée par la pression de commande sur le piston principal 50 augmentée de l'effort du ressort 54, l'ensemble piston principal 50 et pièce d'appui 70 se déplace dans le sens de la flèche H. Le piston auxiliaire 96 reste immobile car il est maintenu en appui sur le barreau 56 par la pression de travail régnant dans la chambre de décompression 94 et par le ressort 100. La bille 86 étant en appui sur le poussoir 98 lui-même fixe reste fixe. Le siège 88 étant fixé sur le piston principal 50 se déplace avec celui-ci sous l'action de la force F dans le sens de la flèche H. Le siège 88 vient alors en appui sur la bille 86 et isole la chambre de décompression 94 de la chambre de réaction 46 et donc isole la chambre de travail 102 de l'orifice d'entrée 44.

Lorsque la pression de travail régnant dans la chambre de travail 102 et dans la chambre de décompression 94 est telle que la force F se trouve juste équilibrée par la force engendrée par la pression de commande sur le piston principal 50 augmentée de l'effort du ressort 54, le piston principal s'immobilise.

Si la force F diminue ou si la pression de commande augmente, le piston principal 50 se déplace dans le sens de la flèche J et autorise, par ouverture de la valve d'isolement 84, un accroissement de pression dans la chambre de décompression 94 et donc dans la chambre de travail 102 jusqu'à ce que la force F équilibre à nouveau la force engendrée par la pression de commande appliquée sur le piston principal 50.

Si la force F devient supérieure à l'effort engendré par la pression de commande appliquée au piston principal 50, celui-ci se déplace dans la direction de la flèche H et le volume de la chambre de décompression 94 augmente du fait du mouvement relatif du piston principal 50 et du piston auxiliaire 96. Cette augmentation de volume de la chambre de décompression 94 entraîne une baisse de pression dans la chambre de travail 102. L'effort transmis par le piston de travail 110 au segment 12 diminuant, la force de réaction F diminue également. Le piston principal 50 se déplace jusqu'à ce que la pression de travail soit telle que la force F se trouve juste équilibrée par la force engendrée par la pression de commande appliquée au piston principal 50.

Lors du relâchement de la pression de commande, dans un premier temps le piston principal 50 se déplace dans le sens de la flèche H pour augmenter le volume de la chambre de décompression 94 diminuant ainsi la pression dans la chambre de travail 102, ceci jusqu'à ce que le piston principal soit en appui sur le fond de la chambre de réaction 46. Dans un deuxième temps, la bille 86 soumise à une pression de travail supérieure à la pression de commande se déplace à l'encontre du ressort 90 et jouant le rôle de clapet de décharge permet au fluide contenu dans la chambre de décompression 94 et dans la chambre de travail 102 de s'écouler vers l'orifice d'entrée 44 au travers de la chambre de réaction 46.

Lorsque la pression de commande et donc la pression de travail sont telles que la force engendrée par le piston de travail est inférieure à l'effort du ressort 32, les segments sont éloignés du tambour tournant et par conséquent la force de réaction F devient nulle. Le piston principal 50 est alors repoussé vers sa position initiale de repos en appui sur le barreau 56 sous l'action du ressort 54, la bille 86 étant écartée de son siège 88 par le poussoir 98.

Lors d'une marche arrière, le tambour tournant dans le sens inverse de la flèche C, la pression de commande appliquée au piston principal 50 tend à déplacer celui-ci dans le sens de la flèche J. Lorsque l'effort engendré sur le piston principal 50 par la pression de commande est supérieur à l'effort du ressort 60, l'ensemble piston principal-piston auxiliaire 96-barreau 56-rondelle 62 et appui 70 est déplacé à l'encontre du ressort 60. Ce déplacement provoque l'engagement de friction du segment 14 contre le tambour tournant (non représenté) et par réaction au travers de l'entretoise 24 l'engagement de friction du segment 12 contre le tambour tournant (non représenté). La réaction de friction du segment 12 est transmise par son extrémité 28 au piston de travail 112 qui vient en butée sur le fond de la chambre de travail 102 assurant ainsi une butée fixe au segment 12.

L'invention permet ainsi d'avoir un couple de freinage en marche avant régulé en permanence en fonction de la pression de commande. En particulier le diamètre du piston de travail est choisi de manière à ce que la force de réaction engendrée par ledit piston de travail sollicité par la pression de commande soit toujours supérieure à la force engendrée par la pression de commande appliquée sur le piston principal, de manière à ce que la pression de travail soit en permanence contrôlée par la valve d'isolement 84 et par la chambre de décompression 94, c'est-à-dire par le piston principal 50. Ceci assure de façon continue la surveillance de la relation couple-pression de commande que l'on veut obtenir. Le diamètre du piston de travail sera tel que le frein sera capable de fournir le couple désiré même dans le cas où le coefficient de friction de la garniture atteindrait une limite inférieure prédéterminée, nettement plus faible que le coefficient de friction nominal de la garniture.

On a représenté sur les figures 4 et 5 un deuxième mode de réalisation d'un frein à tambour conforme à l'invention. Dans ce deuxième mode de réalisation, les organes remplissant des fonctions sensiblement identiques à des organes du premier mode de réalisation ont été désignés par les mêmes numéros de référence augmentés de 200.

Le frein à tambour représenté sur les figures 4 et 5 comporte une plaque support de frein 210 prévue pour être associée à une partie fixe du véhicule (non représentée). Cette plaque support 210 reçoit en coulissement deux segments 212 et 214 comportant sur leur périphérie un matériau de friction 216 maintenu sur les segments au moyen de rivets ou équivalents (non représentés). Les segments 212 et 214 sont maintenus appliqués sur la plaque support 210 au moyen de ressorts 218. Les extrémités 220 et 222 respectivement des segments 212 et 214 sont maintenues appliquées sur un dispositif d'ancrage 320 au moyen d'un ressort 226. Le dispositif d'ancrage 320 est formé par une valve de régulation 240 comportant un corps 242 fixé sur la plaque support 210. Les deux autres extrémités 228 et 230 respectivement des segments 212 et 214 sont appliquées au moyen d'un ressort 232 sur un moteur de frein 238. Le moteur de frein 238 est fixé sur la plaque support 210. Les segments 212 et 214 sont disposés de manière à entrer en engagement de friction avec un tambour tournant (non représenté) sous l'action du moteur de frein 238 qui sollicite en écartement les extrémités 228 et 230 respectivement des segments 212 et 214. Les forces de réaction représentatives du couple engendré par l'engagement de friction des segments 212 et 214 sont transmises à la valve de régulation 240 par les extrémités 220 et 222 respectivement des segments 212 et 214.

La valve de régulation de couple 240 comporte une butée hydraulique 248 formée d'un piston principal 250 monté coulissant dans un alésage 252 du corps 242 et d'une chambre de réaction 246 définie entre le piston 250 et le fond de l'alésage 252.

Tel que montré sur la figure 5, le corps 242 porte un orifice d'entrée 244, susceptible d'être relié à une source de pression de commande telle que, par exemple, le maître-cylindre d'un véhicule (non représenté) qui débouche dans la chambre de réaction 246. Le piston principal 250 est sollicité dans le sens de la flèche B par un ressort 254 en appui sur le fond de l'alésage 252, vers la position de repos (c'est-à-dire lorsque le frein est relâché) contre une butée mécanique. Cette butée mécanique comporte une rondelle 268 en appui sur un circlips 264 monté dans une gorge 266 du corps 242. Le piston principal, sur sa face opposée à la chambre de réaction 246, est en contact par une surface 278 avec une pièce d'appui 270 centrée sur le piston principal au moyen d'une saillie 272 montée dans un dégagement 274 du piston 250. La pièce d'appui 270 coopère, par sa face opposée au piston principal 50, avec l'extrémité 220 du segment 212 (voir Figure 4). Un capuchon de protection 234 en matériau élastique est monté entre la pièce d'appui 270 et la rondelle 268.

Le piston principal 250 comporte une projection 322 sur laquelle vient en appui l'extrémité 222 du segment 214 par l'intermédiaire d'une seconde pièce d'appui 324 (voir Figure 4). Entre la deuxième pièce d'appui 324 et le corps 242 de la valve de régulation 240 est monté un capuchon de protection en matériau élastique.

Une valve d'isolement 284 est montée dans le piston principal 250 coaxialement avec celui-ci. La valve d'isolement 284 comporte une bille 286 susceptible de venir en appui sur un siège 288 fixé sur le piston 250, sous la poussée d'un ressort 290 prenant appui sur le piston 250. La valve d'isolement 284 est reliée d'une part à la chambre de réaction 246 par la canalisation 326 réalisée dans le piston principal 250 et donc à l'orifice d'entrée et d'autre part à une chambre de décompression 294 formée entre le piston principal 250 et un piston auxiliaire 296 monté dans un alésage 282 formé dans le piston principal 250 et coaxial à celui-ci. Le piston auxiliaire 296 porte sur une de ses extrémités un poussoir 298 maintenant la bille 286 en éloignement de son siège 288 lorsque le piston principal 250 est dans sa position de repos. Le piston auxiliaire 296 est maintenu fixe par rapport au corps 242 de la valve de régulation 240 au moyen d'une goupille 328 creuse et fendue passant au travers du piston auxiliaire 296 et maintenue à ses deux extrémités par des alésages 330 et 332 réalisés dans le corps 242. Le piston principal 250 comporte une fente radiale 334 dans laquelle s'étend la goupille 328. Une surface 336 de la fente 334 est disposée de manière à ce que la distance entre cette surface 336 et la goupille 328 soit supérieure à la distance « b » définie entre le piston principal 250 et le fond de la chambre de réaction 246, lorsque le piston principal 250 est dans sa position de repos.

Comme représenté sur les figures 4 et 5, le moteur de frein 238 comporte deux pistons de travail 310 et 342 montés coulissants dans un alésage 312 d'un corps 344 du moteur de frein 238, l'alésage 312 et les deux pistons 310 et 342 définissent une chambre de travail 302. La chambre 302 est reliée à la chambre de décompression 294 de la valve 240 au moyen d'une canalisation (non représentée) reliée d'une part à un orifice d'alimentation 340 prévu sur le corps 344 et débouchent dans la chambre de travail 302 et d'autre part à un orifice de sortie 338 formé sur le corps 242 de la valve 240 ; l'orifice de sortie 338 étant relié à la chambre de décompression 294 au travers de la fente 334 de la goupille fendue 328.

Les pistons 310 et 342 sont sollicités en écartement par un ressort 314 prenant appui sur des dégagements pratiqués dans les pistons 310 et 342. Des capuchons de protection sont montés entre les pistons 310 et 342 et le corps 344 du moteur de frein 238.

De même que dans le premier mode de réalisation l'alésage 282 du piston principal 250 et le fond de cet alésage 282 en vis-à-vis du piston auxiliaire 296 forment, comme on le verra plus précisément lors de la description du fonctionnement, une partie mobile de la chambre de décompression 294. Cette partie mobile est sollicitée d'une part par des premiers moyens d'actionnement formés par le piston principal 250 en contact avec le segment 212 au travers de la pièce d'appui 270 et d'autre part par des seconds moyens d'actionnement formés par le piston principal 250 sensible à la pression régnant dans la chambre de réaction 246.

Le frein à tambour qui vient d'être décrit en se référant aux figures 4 et 5 fonctionne de la façon suivante :

Au repos, lorsqu'aucune pression de commande n'est appliquée à l'orifice d'entrée 244, les différents éléments constituant le frein occupent les positions représentées sur les figures 4 et 5.

Lorsqu'une pression de commande est appliquée dans la chambre de réaction 246 à travers l'orifice 244, celle-ci est également appliquée aux pistons de travail 310 et 342 par l'intermédiaire de la valve d'isolement 284 ouverte, de la chambre de décompression 294 puis par l'orifice de sortie 338, par une canalisation (non représentée), et par l'orifice d'alimentation 340 débouchant dans la chambre de travail 302.

Lorsque la pression de commande et donc la pression de travail régnant dans la chambre 302 est suffisante pour vaincre l'effort du ressort 232, les pistons 310 et 342 coulissent dans l'alésage 312 en écartement l'un de l'autre pour solliciter les segments 212 et 214 en engagement de friction contre un tambour (non représenté) tournant dans le sens de la flèche C.

Lorsque la force de réaction F appliquée par l'extrémité 220 du segment 212 sur le piston principal 250 devient supérieure à la force engendrée par la pression de commande appliquée sur le piston principal augmentée de l'effort du ressort 254 et augmentée de la force d'appui du segment 214 sur la projection 322, l'ensemble piston principal et pièce d'appui 270 se déplace dans le sens de la flèche H. Le piston auxiliaire 296 étant maintenu fixe par la goupille 328, la bille 286 étant en appui sur le poussoir 298, lui-même fixe, reste immobile. Le siège 288 étant fixé sur le piston principal 250 se déplace avec celui-ci sous l'action de la force de réaction F dans le sens de la flèche H. Le siège vient alors en appui sur la bille 286 et isole la chambre de décompression 294 de la chambre de réaction 246 et donc isole la chambre de travail 302 de l'orifice d'entrée 244.

Lorsque la pression de travail régnant dans la chambre 302 et dans la chambre de décompression 294 devient telle que la force de réaction F se trouve juste équilibrée par la force engendrée par la pression de commande sur le piston principal 250 augmentée de l'effort du ressort 254 et de la force d'appui du segment 214 sur la projection 322, le piston principal s'immobilise.

Si la force F diminue ou si la pression de commande augmente, le piston principal 250 se déplace dans le sens de la flèche B et autorise, par ouverture de la valve d'isolement 284, un accroissement de pression dans la chambre de décompression 294 et donc dans la chambre de travail 302 jusqu'à ce que la force F équilibre à nouveau la force engendrée par la pression de commande appliquée au piston principal 250.

Si la force F devient supérieure à l'effort engendré par la pression de commande appliquée au piston principal 250, celui-ci se déplace dans la direction de la flèche H et le volume de la chambre de décompression 294 augmente du fait du mouvement relatif du piston principal 250 et du piston auxiliaire 296. Cette augmentation du volume de la chambre 294 entraîne une baisse de pression dans la chambre de travail 302. Les efforts transmis par les pistons de travail 310 et 342 diminuant, la force de réaction F diminue également. Le piston principal se déplace jusqu'à ce que la pression de travail soit telle que la force F se trouve juste équilibrée par la force engendrée par la pression de commande appliquée au piston principal 250.

Lors du relâchement de la pression de commande, dans un premier temps le piston principal se déplace dans le sens de la flèche H pour augmenter le volume de la chambre de décompression 294 diminuant ainsi la pression de travail régnant dans la chambre de travail 302, ceci jusqu'à ce que le piston principal 250 soit en appui sur le fond de la chambre de réaction. Dans un deuxième temps, la bille 286 soumise à une pression de travail supérieure à la pression de commande se déplace à l'encontre du ressort 290 et jouant le rôle d'un clapet de décharge permet au fluide contenu dans la chambre de décompression 294 et dans la chambre de travail 302 de s'écouler vers l'orifice d'entrée 244 au travers de la chambre de réaction 246.

Lorsque la pression de commande et donc la pression de travail sont telles que la force engendrée par les pistons de travail est inférieure à l'effort du ressort 232, les segments sont éloignés du tambour tournant et par conséquent la force de réaction F s'annule. Le piston principal 250 est alors repoussé vers sa position initiale de repos en appui sur le circlips 264 par l'intermédiaire de la rondelle 268 au moyen du ressort 254, la bille 286 étant écartée de son siège 288 par le poussoir 298.

Lors d'une marche arrière, le tambour tournant dans le sens inverse de la flèche C, la valve d'isolement 284 étant ouverte, la chambre de travail 302 reçoit la pression de commande, ce qui provoque l'écartement des deux pistons de travail 310 et 342. Ce déplacement provoque l'engagement de friction des segments 212 et 214 contre le tambour tournant (non représenté) ; la force de réaction qui apparaît sur le segment 214 est appliquée à la projection 322 du piston principal par l'extrémité 222 du segment 214. Le piston principal 250 étant sur sa butée mécanique constituée par le circlips 264 et la rondelle 268 reste immobile. Aucun mouvement du piston principal 250 n'étant possible, la pression de commande est intégralement transmise au moteur de frein 238. Le frein à tambour fonctionne alors comme un frein sans régulation de couple.

De même que pour le premier mode de réalisation, l'invention permet d'avoir un couple de freinage en marche avant régulé en permanence en fonction de la pression de commande. En particulier, le diamètre des pistons de travail 310 et 342 est choisi de manière à ce que la force de réaction engendrée par les pistons de travail sollicités par la pression de commande soit toujours supérieure à la force engendrée par la pression de commande appliquée sur le piston principal, de manière à ce que la pression de travail soit en permanence contrôlée par la chambre de décompression, c'est-à-dire par le piston principal 250. Ceci assure de façon continue la surveillance de la relation couple-pression de commande que l'on veut obtenir. Le diamètre des pistons de travail sera tel que le frein sera capable de fournir le couple désiré même dans le cas où le coefficient de friction de la garniture atteindrait une limite inférieure prédéterminée nettement plus faible que le coefficient de friction nominal de la garniture.

On a représenté sur les figures 6, 7 et 8 un troisième mode de réalisation d'un frein à tambour conforme à l'invention. Dans ce troisième mode de réalisation, les organes remplissant des fonctions sensiblement identiques à des organes du premier mode de réalisation ont été désignés par les mêmes numéros de référence augmentés de 400.

Le frein à tambour représenté sur les figures 6 à 8 comporte une plaque support 410 prévue pour être associée à une partie fixe du véhicule (non représentée). Cette plaque support 410 reçoit en coulissement deux segments 412 et 414 comportant sur leur périphérie un matériau de friction 416 maintenu sur les segments au moyen de rivets ou équivalents (non représentés). Les segments 412 et 414 sont maintenus appliqués sur la plaque support 410 au moyen de ressorts 418. Les extrémités 420 et 422 respectivement des segments 412 et 414 sont maintenues appliquées sur une entretoise 424 au moyen d'un ressort 426. L'entretoise 424 est libre de se déplacer par rapport à la plaque support. Les deux autres extrémités 428 et 430 respectivement des segments 412 et 414 sont appliquées au moyen de ressorts 432 respectivement sur un moteur de frein 438 et une valve de régulation 440. Le moteur de frein 438 et la valve de régulation 440 sont réalisés dans un même corps 442 fixé sur la plaque support 410. Le segment 412 est disposé de manière à entrer en engagement de friction avec un tambour tournant (non représenté) sous l'action du moteur de frein 438. Par réaction au travers de l'entretoise 424, le segment 414 sera également sollicité en engagement de friction sur le tambour tournant (non représenté). La force de réaction représentative du couple engendré par l'engagement de friction est transmise par le segment 414, plus précisément par son extrémité 430, à la valve de régulation 440.

La valve de régulation de couple 440 comporte une butée hydraulique 448 formée d'un piston principal 450 monté coulissant dans un alésage 452 du corps 442 et d'une chambre de réaction 446 définie entre le piston 450 et le fond de l'alésage 452.

Tel que montré sur les figures 7 et 8, le corps 442 porte un orifice d'entrée 444, formé dans un bouchon 520, susceptible d'être relié à une source de pression de commande telle que, par exemple, le maître-cylindre d'un véhicule (non représenté), qui débouche dans une chambre d'entrée 521. Cette chambre d'entrée 521 est en communication avec la chambre de réaction 446 au moyen d'un passage 528 formé dans le corps 442, d'une gorge circulaire 530 formée dans l'alésage 452, d'un passage 532 formé dans le piston principal 450, d'une chambre auxiliaire 524 et d'une valve auxiliaire 534 montée dans le piston principal 450 coaxialement à celui-ci. La chambre auxiliaire 524 est formée entre le fond d'un alésage 474 formé dans le piston principal 450 et un piston intérieur 522 monté dans l'alésage 474 du piston principal 450. Le piston principal 450 est sollicité dans le sens de la flèche G par un ressort 454 en appui sur le fond de l'alésage 452, vers la position de repos (c'est-à-dire lorsque le frein est relâché) contre une butée mécanique. Cette butée mécanique comporte une rondelle 468 en appui sur un circlips 464 monté dans une gorge 466 du corps 442. Le piston principal sur sa face opposée à la chambre de réaction 446 est en contact par une surface 478 avec une pièce d'appui 470 centrée sur le piston principal 450 au moyen d'une saillie 472 montée dans l'alésage 474 du piston principal. La pièce d'appui 470 coopère, par sa face opposée au piston principal 450, avec l'extrémité 430 du segment 414 (voir Figure 6). Un capuchon de protection 434 est monté entre la pièce d'appui 470 et le corps 442. Un ressort 526 est monté entre la pièce d'appui 470 et le piston intérieur 522. Le piston principal 450 porte un siège 536 de la valve auxiliaire 534. Une bille 538 de la valve auxiliaire est maintenue écartée du siège 536, à l'encontre d'un ressort 540, par un poussoir 542 solidaire du piston intérieur 522.

Dans la chambre d'entrée 521 est monté un piston étagé 544 maintenu en appui sur un épaulement 546 du corps 442 par l'intermédiaire d'un support de poussoir 548 au moyen d'un ressort 550 placé dans la chambre d'entrée 521 et prenant appui sur le bouchon 520. Le piston étagé 544 comporte une partie de grand diamètre 552 coulissant dans un alésage 554 formé dans le corps 442 et une partie de petit diamètre 556 montée dans un alésage 558 du corps 442. Entre la partie de grand diamètre 552 du piston étagé, la partie de petit diamètre 556 du même piston étagé et l'alésage 554 du corps 442 est formée une chambre 560 qui est mise à l'atmosphère. La partie de petit diamètre 556 du piston étagé porte à son extrémité une saillie circulaire 562 qui est en appui sur un support de poussoir 548 et qui reçoit en appui un piston de contrôle 564 monté dans un alésage 566 formé dans le corps 442. Ledit piston de contrôle 564 est d'un diamètre inférieur au diamètre de la partie de petit diamètre 556 du piston étagé 544. Entre le corps 442 et le piston de contrôle 564 est formée une chambre de contrôle 568. La chambre de contrôle 568 est reliée à la chambre de réaction 446 par une canalisation 570. Le piston de contrôle 564 porte sur son extrémité placée en vis-à-vis du piston étagé une rainure diamétrale 572 dans laquelle s'étend le support de poussoir 548 formé par un barreau. Entre ledit piston de contrôle 564 et le piston étagé 544 est formée une chambre de décompression 494. Le piston étagé 544 porte une valve d'isolement 484 formée d'une bille 486 susceptible de venir en appui sur un siège 488, défini sur le piston étagé 544, sous la poussée d'un ressort 490 prenant appui sur une saillie 492 du piston étagé 544. La valve d'isolement 484 est reliée d'une part à la chambre d'entrée 521 et d'autre part à la chambre de décompression 494. Le support de poussoir 548 porte un poussoir 498 maintenant la bille 486 en éloignement de son siège 488 lorsque le piston étagé 544 est dans sa position de repos, c'est-à-dire lorsqu'il est en appui sur l'épaulement 546 du corps 442 par l'intermédiaire du support de poussoir 548.

Le moteur de frein 438 comporte un piston de travail 510 monté coulissant dans un alésage 512 du corps 442 et définissant avec le fond dudit alésage une chambre de travail 502. La chambre 502 est reliée à la chambre de décompression 494 de la valve 440 au moyen d'un passage 574 réalisé dans le corps 442 et débouchant dans la chambre de décompression 494. Le piston 510 est maintenu en appui sur l'extrémité 428 du segment 412 au moyen d'un ressort 514 placé dans la chambre de travail 502. Un capuchon en matériau élastique est monté entre le corps 442 et le piston 510 (voir Figure 6).

L'extrémité de petit diamètre du piston étagé 544 forme, comme on le verra plus précisément lors de la description du fonctionnement, une partie mobile de la chambre de décompression 494. L'extrémité du piston de contrôle 564 placée en vis-à-vis du piston étagé forme une deuxième partie mobile de la chambre de décompression. Ces parties mobiles sont sollicitées d'une part par des premiers moyens d'actionnement formés par le piston principal 450 en contact avec le segment 414 et par le piston de contrôle 564 et d'autre part par des seconds moyens d'actionnement formés par le piston étagé 544 sensible à la pression régnant dans la chambre d'entrée 521.

Le frein à tambour qui vient d'être décrit en se référant aux figures 6 à 8 fonctionne de la façon suivante :

Au repos, lorsqu'aucune pression de commande n'est appliquée à l'orifice d'entrée 444, les différents éléments constituant le frein occupent les positions représentées sur les figures 6 à 8.

Lorsqu'une pression de commande est appliquée à l'orifice d'entrée 444, celle-ci est appliquée dans un premier temps d'une part au piston de travail 510 par l'intermédiaire de la chambre d'entrée 521 de la valve d'isolement 484, ouverte en position de repos, de la chambre de décompression 494, de la canalisation 574 et de la chambre de travail 502, et d'autre part au piston principal 450 par l'intermédiaire de la canalisation 528, de la gorge 530, de la canalisation 532, de la valve auxiliaire 540, ouverte en position de repos du piston intérieur 522, et par la chambre de réaction 446. Dans un deuxième temps, lorsque l'effort engendré par la pression de commande appliquée au piston intérieur 522 est supérieure à l'effort engendré par le ressort 526, ledit piston intérieur se déplace à l'encontre du ressort 526, ce qui permet la fermeture de la valve auxiliaire 534, le poussoir 542 maintenant ladite valve 534 ouverte étant solidaire du piston intérieur 522. La chambre de réaction 446 est alors isolée de l'orifice d'entrée 444. Dans un troisième temps, lorsque la pression de commande et donc la pression de travail régnant dans la chambre 502 est suffisante pour vaincre l'effort des ressorts 432, le piston 510 coulisse dans son alésage 512 dans la direction de la flèche L pour solliciter le segment 412 en engagement de friction contre un tambour (non représenté) tournant dans le sens de la flèche C. Par réaction au travers de l'entretoise 424, le segment 414 est également sollicité en engagement de friction. La force de réaction F de friction du segment 414 est appliquée à la pièce d'appui 470 et donc au piston principal 450.

Lorsque la force de réaction F devient supérieure à la force engendrée par la pression régnant dans la chambre de réaction 446 sur le piston principal, augmentée de l'effort du ressort 454, l'ensemble piston principal 450 et pièce d'appui 470 se déplace dans le sens de la flèche H. La pression de commande étant toujours appliquée au piston intérieur, la valve auxiliaire reste fermée. Le piston principal 450 comprime le fluide contenu dans la chambre 446 dans la canalisation 570 et dans la chambre de contrôle 568. Lorsque l'effort f engendré par le piston de contrôle 564 soumis à la pression régnant dans la chambre de contrôle 568 devient supérieur à l'effort engendré par le piston étagé soumis à la pression de commande augmentée de l'effort du ressort 550, l'ensemble piston de contrôle 564 et piston étagé 552 se déplace à l'encontre du ressort 550. Le support de poussoir 548 reste en appui sur l'épaulement 546 du corps 442 au moyen du ressort 490 par l'intermédiaire de la bille 486 et du poussoir 498, l'ensemble bille poussoir et support de poussoir reste donc fixe. Le siège 488 étant fixé sur le piston étagé 544 se déplace avec celui-ci sous l'action du piston de contrôle. Le siège 488 vient alors en appui sur la bille 486 et isole la chambre de décompression 494 de la chambre d'entrée 521 et donc isole la chambre de travail 502 de l'orifice d'entrée 444.

Lorsque l'effort f engendré par le piston de contrôle 564 se trouve juste équilibré par l'effort engendré par le piston étagé soumis à la pression de commande sur sa partie de grand diamètre 522 augmentée de l'effort du ressort 550, le piston étagé s'immobilise.

Si la force F et donc l'effort f diminuent ou si la pression de commande augmente, le piston étagé 544 se déplace dans le sens de la flèche K et autorise par l'ouverture de la valve d'isolement 484, un accroissement de pression dans la chambre de décompression 494 et donc dans la chambre de travail 502 jusqu'à ce que l'effort f équilibre à nouveau la force engendrée par la pression de commande appliquée sur le piston étagé 544. Si l'effort f engendré par la pression régnant dans la chambre de contrôle 568 devient supérieur à l'effort engendré par la pression de commande appliquée sur le piston étagé 544, le piston étagé 544 se déplace encore davantage à l'encontre du ressort 550. Le volume de la chambre de décompression 494 augmente du fait que le diamètre du piston de contrôle 564 est inférieur au diamètre de la partie de petit diamètre 556 du piston étagé 544. Cette augmentation de volume de la chambre de décompression 494 entraîne une baisse de pression dans la chambre de travail 502. L'effort transmis par ledit piston de travail 510 au segment 412 diminue, et donc la force de réaction F appliquée au piston principal 450 diminue également, ce qui entraîne un abaissement de la pression dans la chambre de réaction 546 et donc dans la chambre de contrôle 568.

Lors du relâchement de la pression de commande, dans un premier temps le piston étagé se déplace dans le sens de l'effort f pour augmenter le volume de la chambre de décompression 494 et donc diminuer la pression de travail régnant dans la chambre 502, ceci jusqu'à ce que le piston étagé 544 soit venu en appui sur le bouchon 520 par son extrémité de grand diamètre 552. Dans un deuxième temps sous l'effet de la pression de travail d'une part et de la pression de commande d'autre part la valve d'isolement 484 joue le rôle d'un clapet de décharge permettant au fluide contenu dans la chambre de travail 502 et dans la chambre de décompression 494 de s'écouler vers la chambre d'entrée 521 et donc vers l'orifice d'entrée 444.

Lorsque la pression de commande et donc la pression de travail sont telles que la force engendrée par le piston de travail est inférieure à l'effort des ressorts 432, les segments sont éloignés du tambour tournant et par conséquent la force de réaction F s'annule. Le piston principal 450 est alors repoussé vers sa position de repos en appui sur le circlips 464 au moyen du ressort 454. La pression régnant dans la chambre de réaction ayant ainsi diminué, le piston de contrôle 564 ne s'oppose plus au mouvement du piston étagé 544 qui revient à sa position de repos au moyen du ressort 550. Ce mouvement du piston étagé 544 assure l'ouverture de la valve d'isolement 484, la bille 486 étant éloignée de son siège 488 à l'encontre du ressort 490 au moyen du poussoir 498. Lorsque la pression de commande est telle que l'effort engendré par celle-ci sur le piston intérieur 522 est inférieur à l'effort fourni par le ressort 526, le piston intérieur 522 est repoussé par ledit ressort 526, ce qui assure l'ouverture de la valve auxiliaire au moyen du poussoir 542 éloignant la bille 538 de son siège 536 à l'encontre du ressort 540, mettant ainsi en communication la chambre de réaction 446 et donc la chambre de contrôle 568 avec l'orifice d'entrée 444.

Lors d'une marche arrière, le tambour tournant dans le sens contraire de la flèche C, la pression de commande est appliquée au piston de travail 510, au piston principal 450 et au piston intérieur 522. De même que dans le fonctionnement en marche avant du véhicule, le piston intérieur 522 se déplace à l'encontre du ressort 526 et vient en appui sur la pièce d'appui 470. Lorsque l'effort engendré par la pression de commande sur le piston intérieur 522 devient supérieur à l'effort du ressort 432, l'ensemble piston intérieur 522 et pièce d'appui 470 se déplace dans l'alésage 474 du piston principal 450 pour solliciter le segment 414 en engagement de friction contre le tambour tournant (non représenté) et par réaction au travers de l'entretoise 424 solliciter en engagement de friction le segment 412 contre le même tambour tournant (non représenté). La réaction de friction du segment 412 est transmise par son extrémité 428 au piston de travail 512 qui vient en butée sur le fond de la chambre de travail 502 assurant ainsi une butée fixe au segment 412.

De même que dans les deux modes de réalisation précédents, il apparaît de la description qui précède que la valve de régulation de couple est capable d'assurer un couple de freinage régulé en permanence en fonction de la pression de commande.

Il apparaît également de la description qui précède que la valve de régulation faisant partie intégrante du frein ne nécessite pas de modifications des liaisons hydrauliques et que l'encombrement du frein donc son implantation sur le véhicule n'est pas affecté.

Il va de soi que les trois freins à tambour qui viennent d'être décrits à titre d'exemple ne limitent pas la portée de l'invention et que celle-ci peut s'appliquer à différentes variantes de freins à tambour, en particulier les freins peuvent comporter des dispositifs de rattrapage automatique d'usure ou bien des commandes de frein de stationnement. Des modifications peuvent être également envisagées dans le dispositif de régulation de couple lui-même, notamment en ce qui concerne la structure et la forme des différents éléments qui le constituent.

**Revendications**

1. Frein à tambour du type comportant deux segments (12, 14 ; 212, 214 ; 412, 414) actionnés par un moteur hydraulique de frein (38 ; 238 ; 438) et un orifice d'entrée (44 ; 244 ; 444) de fluide destiné à être raccordé à une source de pression de commande, ledit frein comportant une valve de régulation de couple (40 ; 240 ; 440) définie dans un corps fixe (42 ; 242 ; 442) abritant une valve d'isolement (84 ; 284 ; 484) étant commandée par une partie mobile notamment maintenue en équilibre entre des premiers moyens d'actionnement liés à l'un desdits segments (14 ; 212 ; 414) et des seconds moyens d'actionnement sensibles à une pression de commande établie audit orifice d'entrée (44 ; 244 ; 444), caractérisé en ce que ladite valve de régulation (40 ; 240 ; 440) abrite une chambre de décompression (94 ; 294 ; 494) à volume variable en communication permanente avec ledit moteur de frein (38 ; 238 ; 438) et communiquant avec ledit orifice d'entrée (44 ; 244 ; 444) par l'intermédiaire de ladite valve d'isolement (84 ; 284 ; 484), les variations de volume de ladite chambre (94 ; 294 ; 494) étant obtenues par le déplacement de ladite partie mobile, ce déplacement dans le sens d'une fermeture de la valve d'isolement (84 ; 284 ; 484) correspondant à une augmentation du volume de ladite chambre (94 ; 294 ; 494) et peut se poursuivre après la fermeture de ladite valve d'isolement (84 ; 284 ; 484).

2. Frein à tambour selon la revendication 1, caractérisé en ce que ledit moteur de frein hydraulique (38 ; 238 ; 438) est surdimensionné par rapport aux paramètres usuels dudit frein, pour faire face à une baisse d'efficacité de freinage jusqu'à une limite inférieure prédéterminée par rapport au couple nominal de freinage.

3. Frein à tambour selon les revendications 1 ou 2, caractérisé en ce qu'il comporte une butée hydraulique (48 ; 248 ; 448) matérialisée dans ledit corps fixe (42 ; 242 ; 442) par une chambre de réaction (46 ; 246 ; 446) remplie de fluide et un piston principal (50 ; 250 ; 450) définissant une paroi mobile de ladite chambre de réaction (46 ; 246 ; 446) sur laquelle ledit segment (14 ; 212 ; 414) est en appui, une liaison de remplissage étant ménagée entre ladite chambre de réaction (46 ; 246 ; 446) et ledit orifice d'entrée (44 ; 244 ; 444).

4. Frein à tambour selon la revendication 3, caractérisé en ce qu'un ressort (54 ; 254 ; 454) sollicite ledit piston principal vers une butée mécanique définissant la position de repos de celui-ci, ledit ressort (54 ; 254 ; 454) agissant à l'encontre de la force de réaction développée par ledit segment (14 ; 212 ; 414).

5. Frein à tambour selon la revendication 4, caractérisé en ce que ledit ressort (54 ; 254 ; 454) est placé dans ladite chambre de réaction (46 ; 246 ; 446).

6. Frein à tambour selon l'une quelconque des revendications 3 à 5, caractérisé en ce que ladite chambre de décompression (94 ; 294) et ladite valve d'isolement (84 ; 284) sont logées à l'intérieur dudit piston principal (50 ; 250).

7. Frein à tambour selon la revendication 6, caractérisé en ce que ladite chambre de réaction (46 ; 246) est directement reliée à l'orifice d'entrée (44 ; 244) et que ladite valve d'isolement (84 ; 284) est placée entre ladite chambre de réaction (46 ; 246) et ladite chambre de décompression (94 ; 294).

8. Frein à tambour selon la revendication 7, caractérisé en ce que ladite chambre de décompression (94 ; 294) est formée entre ledit piston principal (50 ; 250) et un piston auxiliaire (96 ; 296) fixe selon au moins la direction de fonctionnement en marche avant.

9. Frein à tambour selon la revendication 8, caractérisé en ce que ledit piston principal (50 ; 250), ladite valve d'isolement (84 ; 284) et ledit piston auxiliaire (96 ; 296) sont montés coaxialement.

10. Frein à tambour selon la revendication 9, caractérisé en ce que ledit piston auxiliaire (96 ; 296) porte un poussoir (98 ; 298) coopérant avec ladite valve d'isolement (84 ; 284) en fonction des positions relatives dudit piston principal (50 ; 250) et dudit piston auxiliaire (96 ; 296) ; ladite valve d'isolement (84 ; 284) étant ainsi maintenue ouverte lorsque ledit piston principal (50 ; 250) est en position de repos.

11. Frein à tambour selon l'une quelconque des revendications 1 à 10, caractérisé en ce que le corps (42) de ladite valve de régulation de couple (40) abrite également ledit moteur de frein.

12. Frein à tambour selon la revendication 4 prise en combinaison avec la revendication 11, caractérisé en ce que ladite butée mécanique comprend un ressort (60) coaxial audit piston principal (50) coopérant d'une part avec ledit piston (50) et d'autre part avec un appui fixe (64) porté par ledit corps (42) de ladite valve (40), pour permettre un mouvement limité dudit piston principal (50) vers l'extérieur dudit corps (42) et actionner ainsi ledit segment (14) lors d'un freinage en marche arrière.

13. Frein à tambour selon la revendication 12, caractérisé en ce que ledit piston principal (50) coopère avec ledit ressort (60) par l'intermédiaire d'un barreau transversal (56) et d'un élément annulaire (62) pressés par ledit ressort contre une saille radiale (58) dudit corps (42) de valve de régulation (40), ledit barreau (56) traversant un embrèvement diamétral (76) dudit piston principal (50) pour constituer une butée audit piston auxiliaire (96).

14. Frein à tambour selon l'une quelconque des revendications 1 à 10, du type comportant un moteur de frein (238) placé entre deux extrémités (228, 230) adjacentes desdits deux segments (212, 214) et comportant un dispositif d'ancrage (320) placé entre les deux autres extrémités (220, 222) desdits segments (212, 214), caractérisé en ce que ledit dispositif d'ancrage (320) est formé par ladite valve de régulation de couple (240).

15. Frein à tambour selon la revendication 14 prise en combinaison avec la revendication 3, caractérisé en ce que ledit piston principal (250) comporte une projection (322) sur laquelle vient en appui l'autre desdits segments (214).

16. Frein à tambour selon la revendication 14 prise en combinaison avec la revendication 8, caractérisé en ce que ledit piston auxiliaire (296) est maintenu fixe par rapport audit corps (242) de valve de régulation (240) au moyen d'une goupille (328) ancrée dans ledit corps (242) et traversant ledit piston principal (250) par une fente radiale (334) s'étendant dans le sens axial du piston principal (250) pour permettre les déplacements de celui-ci par rapport audit corps fixe (242).

17. Frein à tambour selon l'une quelconque des revendications 3 à 5, caractérisé en ce que lesdits premiers moyens d'actionnement comprennent notamment ledit piston principal (450), que celui-ci comporte un piston intérieur (522) susceptible de se déplacer axialement à l'encontre de moyens élastiques (526) sous l'action de ladite pression de commande et une valve auxiliaire (534) placée sur le passage reliant ledit orifice d'entrée (444) à ladite chambre de réaction (446), ladite valve auxiliaire (534) étant maintenue ouverte par ledit piston intérieur (522) lorsque celui-ci est dans sa position de repos.

18. Frein à tambour selon la revendication 17, caractérisé en ce que la partie mobile précitée de la chambre de décompression (494) est constituée par un piston étagé (544), mobile à l'intérieur d'un alésage correspondant en gradins (554, 558), renfermant ladite valve d'isolement (484) ; lesdits seconds moyens d'actionnement comprenant une chambre d'entrée (521) reliée audit orifice d'entrée (444) et formée par la partie de plus grand diamètre (552) dudit piston étagé (544).

19. Frein à tambour selon la revendication 18, caractérisé en ce que lesdits premiers moyens d'actionnement comportent également un piston de contrôle (564) mobile dans un alésage (566) et placé entre ladite chambre de réaction (446) et ladite chambre de décompression (494), ledit piston de contrôle (564) constituant une autre partie mobile de ladite chambre de décompression (494).

20. Frein à tambour selon la revendication 19, caractérisé en ce que ledit piston de contrôle (564) a un diamètre plus petit que le petit diamètre dudit piston étagé (544), et en ce que ledit piston de contrôle (564) et ledit piston étagé (544) coopèrent en déplacement pour assurer une variation de volume de ladite chambre de décompression (494).

21. Frein à tambour selon la revendication 20, caractérisé en ce qu'un ressort (550) est monté dans ladite chambre d'entrée (521) et sollicite ledit piston étagé (544) à l'encontre dudit piston de contrôle (564) pour que ledit piston étagé (544) soit en appui dans une position de repos sur un épaulement fixe (546) par l'intermédiaire d'un support de poussoir (548) de ladite valve d'isolement (484), cette dernière étant maintenue ouverte dans ladite position de repos par un poussoir (498), monté sur ledit support de poussoir (548).

22. Frein à tambour selon la revendication 21, caractérisé en ce que le piston étagé (544) et le piston de contrôle (564) sont normalement en contact par leurs faces en vis-à-vis et en ce que ledit support de poussoir (548) est monté dans une rainure diamétrale (572) dudit piston de contrôle (564), ladite rainure diamétrale (572) ayant une profondeur telle que la distance au repos entre ledit support de poussoir (548) et le fond de ladite rainure (572) soit supérieure à la distance axiale entre un siège (536) de ladite valve d'isolement (484) et un élément mobile (538) de ladite valve (484) lorsque ledit piston étagé (544) est en position de repos.

23. Frein à tambour selon la revendication 17, caractérisé en ce qu'un alésage (474) pratiqué dans ledit piston principal (450) et recevant ledit piston intérieur (522) est prolongé dans la direction dudit segment (414) pour permettre la sollicitation dudit segment (414) par ledit piston intérieur (522) lors d'un freinage en marche arrière.

24. Frein à tambour selon la revendication 17, caractérisé en ce que ledit moteur de frein (438), ladite butée hydraulique (448), ladite chambre de décompression (494) et les premiers et seconds moyens d'actionnement sont logés dans un corps unique fixe (442).

## Claims

1. A drum brake of the type comprising a pair of segments (12, 14 ; 212, 214 ; 412, 414) acutated by a hydraulic brake motor (38 ; 238 ; 438) and a fluid inlet orifice (44 ; 244 ; 444) adapted to be connected to a control pressure source, said brake comprising a brake force regulating valve (40 ; 240 ; 440) defined in a fixed casing (42 ; 242 ; 442) including an isolating valve (84 ; 284 ; 484) inserted between the inlet orifice (44 ; 244 ; 444) and said brake motor (38 ; 238 ; 438), said isolating valve (84 ; 284 ; 484) being controlled by a movable part maintained in balance between first acutating means connected to one of said segments (14 ; 212 ; 414) and second actuating means responsive to a control pressure established at said inlet orifice (44 ; 244 ; 444), characterized in that said regulating valve (40 ; 240 ; 440) includes a pressure reducing chamber (94 ; 294 ; 494) of variable volume, said chamber being in permanent communication with said brake motor (38 ; 238 ; 438) and communicating with said inlet orifice (44 ; 244 ; 444) via said isolating valve (84 ; 284 ; 484), the volume variations of said chamber (94 ; 294 ; 494) being obtained by displacement of said movable part, a displacement in a sense of closing the isolating valve (84 ; 284 ; 484) corresponding to an increase of volume of said chamber (94 ; 294 ; 494) and being adapted to continue after closing of said isolating valve (84 ; 284 ; 484).

2. A drum brake according to claim 1, characterized in that said hydraulic brake motor (38 ; 238 ; 438) is overdimensioned with respect to the usual parameters of said brake to counteract a braking efficiency decrease up to a predetermined lower limit with respect to the nominal brake torque.

3. A drum brake according to claim 1 or claim 2, characterized in that it comprises an hydraulic abutment (48 ; 248 ; 448) formed in said fixed casing (42 ; 242 ; 442) by a reaction chamber (46 ; 246 ; 446) filled with fluid an a main piston (50 ; 250 ; 450) defining a movable wall of said reaction chamber (46 ; 246 ; 446), which is engaged by said segment (14 ; 212 ; 414), a filling connection being provided between said reaction chamber (46 ; 246 ; 446) and said inlet orifice (44 ; 244 ; 444).

4. A drum brake according to claim 3, characterized in that a spring (54 ; 254 ; 454) biases said main piston towards a mechanical abutment defining the rest position thereof, said spring (54 ; 254 ; 454) acting opposite to the reaction force developped by said segment (14 ; 212 ; 414).

5. A drum brake according to claim 4, characterized in that said spring (54 ; 254 ; 454) is disposed in said reaction chamber (46 ; 246 ; 446).

6. A drum brake according to any of claims 3 to 5, characterized in that said pressure reducing chamber (94 ; 294) and said isolating valve (84 ; 284) are disposed within that main piston (50 ; 250).

7. A drum brake according to claim 6, characterized in that said reaction chamber (46 ; 246) is directly connected to the inlet orifice (44 ; 244) and in that the isolating valve (84 ; 284) is disposed between said reaction chamber (46 ; 246) and said pressure reducing chamber (94 ; 294).

8. A drum brake according to claim 7, characterized in that said pressure reducing chamber (94 ; 294) is formed between said main piston (50 ; 250) and an auxiliary piston (96 ; 296) fixed along at least the direction of operation during forward drive.

9. A drum brake according to claim 8, characterized in that said main piston (50 ; 250) said isolating valve (84 ; 284) and the auxiliary piston (96 ; 296) are coaxially mounted.

10. A drum brake according to claim 9, characterized in that said auxiliary piston (96 ; 296) carries a push member (98 ; 298) cooperating with said isolating valve (84 ; 284) in response to relative positions of said main piston (50 ; 250) and said auxiliary piston (96 ; 296), said isolating valve (84 ; 284) being thereby maintained open while said main piston (50 ; 250) is in its rest position.

11. A drum brake according to any of claims 1 to 10, characterized in that the casing (42) of said brake force regulating valve (40) also includes said brake motor.

12. A drum brake according to claim 4 in connection with claim 11, characterized in that said mechanical abutment comprises a spring (60) coaxial to said main piston (50) cooperating on one hand with said piston (50) and on the other hand with a fixed abutment (64) carried by said casing (42) of said valve (40) for permitting a limited movement of said main piston (50) towards the exterior of said casing (42) and to thereby actuate said segment (14) for braking during rearward drive.

13. A drum brake according to claim 12, characterized in that said main piston (50) cooperates with said spring (60) via a transverse rod (56) and an annular element (62) urged by said spring against a radial projection (58) of said casing (42) of the regulating valve (40), said rod (56) traversing a diametrical recess (76) of said main piston (50) for constituting an abutment of said auxiliary piston (96).

14. A drum brake according to any of claims 1 to 10 of the type comprising a brake motor (238) displaced between two adjacent ends (228, 230) of said two segments (212, 214) and comprising an anchorage device (320) disposed between the other two ends (220, 222) of said segments (212, 214), characterized in that said anchorage device (320) is formed by said brake force regulating valve (240).

15. A drum brake according to claim 14 in connection with claim 3, characterized in that said main piston (250) comprises a projection (322) which is engaged by the other of said segments (214).

16. A drum brake according to claim 14 in connection with claim 8, characterized in that said auxiliary piston (296) is maintained fixed with respect to said casing (242) of the regulating valve (240) by means of a pin (328) anchored in said casing (242) and traversing said main piston (250) by a radial slot (334) extending in the axial sense of the main piston (250) for permitting displacement thereof with respect to said fixed casing (242).

17. A drum brake according to any of claims 3 to 5, characterized in that said first actuating means comprise in particular said main piston (450), in that the main piston comprises an inner piston (522) adapted to be axially displaced opposite to resilient means (526) under the action of said control pressure, and an auxiliary valve (534) disposed on the passage connecting said inlet orifice (444) to said reaction chamber (446), said auxiliary valve (534) being maintained open by said inner piston (522) while the latter is in its rest position.

18. A drum brake according to claim 17, characterized in that the said movable part of the pressure reducing chamber (494) is comprised of a stepped piston (544) movable within a correspondingly stepped bore (554, 558) including said isolating valve (484), said second actuating means comprising an inlet chamber (521) connected to said inlet orifice (444) and formed by the portion of largest diameter (552) of said stepped piston (544).

19. A drum brake according to claim 18, characterized in that said first actuating means comprise a control piston (564) movable in a bore (566) and disposed between said reaction chamber (446) and said pressure reducing chamber (494), said control piston (564) forming an other movable part of said pressure reducing chamber (494).

20. A drum brake according to claim 19, characterized in that said control piston (564) has a diameter that is smaller than the small diameter of said stepped piston (544), and in that the control piston (564) and the stepped piston (544) cooperate during displacement to assure a variation of volume of said pressure reducing chamber (494).

21. A drum brake according to claim 20, characterized in that a spring (550) is mounted in said inlet chamber (521) and biases said stepped piston (544) in a direction opposite to said control piston (564) such that said stepped piston (544) is in engagement with a fixed shoulder (546) in a rest position via a push member support (548) of said isolating valve (484), the latter being held open in said rest position by a push member (498) mounted on said push member support (548).

22. A drum brake according to claim 21, characterized in that the stepped piston (544) and the control piston (564) are normally in contact by their adjacent faces and in that said push member support (548) is mounted in a diametral groove (572) of said control piston (564), said diametral groove (572) having a depth such that the distance in rest between said push member support (548) and the bottom of said groove (572) exceeds the axial distance between a seat (536) of said isolating valve (484) and a movable element (538) of said valve (484) while said stepped piston (544) is in its rest position.

23. A drum brake according to claim 17, characterized in that a bore (474) provided in said main piston (450) and receiving said interior piston (522) is extended in the direction of said segment (414) for permitting the biasing of said segment (414) by said interior piston (522) for braking during rearward drive.

24. A drum brake according to claim 17, characterized in that said brake motor (438), said hydraulic abutment (448), said pressure reducing chamber (494) and the first and second actuating means are situated within a single fixed casing (442).

**Ansprüche**

1. Trommelbremse mit zwei Bremsbacken (12, 14 ; 212, 214 ; 412, 414), die durch einen hydraulischen Bremsmotor (38 ; 238 ; 438) betätigbar sind, und einer Strömungsmittel-Einlaßöffnung (44 ; 244 ; 444), die an eine Steuerdruckquelle anschließbar ist, wobei die Bremse ein Bremskraftregelventil (40 ; 240 ; 440) aufweist, das in einem festgelegten Gehäuse (42 ; 242 ; 442) gebildet ist, welches ein zwischen der Einlaßöffnung (44 ; 244 ; 444) und dem Bremsmotor (38 ; 238, 438) angeordnetes Sperrventil (84 ; 284 ; 484) enthält, wobei das Sperrventil (84 ; 284 ; 484) durch ein bewegliches Teil gesteuert wird, das zwischen ersten und zweiten Betätigungsmitteln im Gleichgewicht gehalten wird, wobei die ersten Betätigungsmittel mit einem der Bremsbacken (14 ; 212 ; 414) verbunden sind und die zweiten Betätigungsmittel auf einen in der Einlaßöffnung (44 ; 244 ; 444) herrschenden Steuerdruck ansprechen, dadurch gekennzeichnet, daß das Regelventil (40 ; 240 ; 440) eine volumenveränderliche Druckminderkammer (94 ; 294 ; 494) enthält, die mit dem Bremsmotor (38 ; 238 ; 438) ständig in Verbindung steht und mit der Einlaßöffnung (44 ; 244 ; 444) über das Sperrventil (84 ; 284 ; 484) verbunden ist, wobei die Volumenänderungen der Kammer (94 ; 294 ; 494) durch Verschiebung des beweglichen Teiles erzielt werden, wobei die Verschiebung im Sinne eines Schließens des Sperrventils (84 ; 284 ; 484) einer Volumenvergrößerung der Kammer (94 ; 294 ; 494) entspricht und sich nach dem Schließen des Sperrventils (84 ; 284 ; 484) fortsetzen kann.

2. Trommelbremse nach Anspruch 1, dadurch gekennzeichnet, daß der hydraulische Bremsmotor (38 ; 238 ; 438) bezüglich der üblichen Parameter der Bremse überdimensioniert ist, um einen Abfall der Bremswirkung bis zu einer vorgegebenen unteren Grenze bezüglich des Nennbremsmomentes auszugleichen.

3. Trommelbremse nach Anspruch 1 oder 2, gekennzeichnet durch einen hydraulischen Anschlag (48 ; 248 ; 448), der in dem festgelegten Gehäuse (42 ; 242 ; 442) durch eine mit Strömungsmittel gefüllte Reaktionskammer (46 ; 246 ;

446) gebildet wird, und einen Hauptkolben (501250 ; 450), der eine bewegliche Wand der Reaktionskammer (46 ; 246 ; 446) bildet, an der der Bremsbacken (14 ; 212 ; 414) angreift, wobei zwischen der Reaktionskammer (46 ; 246 ; 446) und der Einlaßöffnung (44 ; 244 ; 444) eine Auffüllverbindung gebildet ist.

4. Trommelbremse nach Anspruch 3, dadurch gekennzeichnet, daß eine Feder (54 ; 254 ; 454) den Hauptkolben in Richtung auf einen mechanischen Anschlag vorspannt, der die Ruhestellung desselben festlegt, wobei die Feder (54 ; 254 ; 454) entgegen der von dem Bremsbacken (14 ; 212 ; 414) erzeugten Reaktionskraft wirkt.

5. Trommelbremse nach Anspruch 4, dadurch gekennzeichnet, daß die Feder (54 ; 254 ; 454) in der Reaktionskammer (46 ; 246 ; 446) angeordnet ist.

6. Trommelbremse nach einem der Ansprüche 3 bis 5, dadurch gekennzeichnet, daß die Druckminderkammer (94 ; 294) und das Sperrventil (84 ; 284) im Inneren des Hauptkolbens (50 ; 250) angeordnet sind.

7. Trommelbremse nach Anspruch 6, dadurch gekennzeichnet, daß die Reaktionskammer (46 ; 246) direkt mit der Einlaßöffnung (44 ; 244) verbunden ist und daß das Sperrventil (84 ; 284) zwischen der Reaktionskammer (46 ; 246) und der Druckminderkammer (94 ; 294) angeordnet ist.

8. Trommelbremse nach Anspruch 7, dadurch gekennzeichnet, daß die Druckminderkammer (94 ; 294) zwischen dem Hauptkolben (50 ; 250) und einem Hilfskolben (96 ; 296) gebildet ist, der zumindest in der zur Vorwärtsfahrt gehörenden Wirkrichtung festgelegt ist.

9. Trommelbremse nach Anspruch 8, dadurch gekennzeichnet, daß der Hauptkolben (50 ; 250), das Sperrventil (84 ; 284) und der Hilfskolben (96 ; 296) koaxial gelagert sind.

10. Trommelbremse nach Anspruch 9, dadurch gekennzeichnet, daß der Hilfskolben (96 ; 296) einen Stößel (98 ; 298) trägt, der mit dem Sperrventil (84 ; 284) in Abhängigkeit von den Relativstellungen des Hauptkolbens (50 ; 250) und des Hilfskolbens (96 ; 296) zusammenwirkt, wodurch das Sperrventil (84 ; 284) offen gehalten wird, während sich der Hauptkolben (50 ; 250) in der Ruhestellung befindet.

11. Trommelbremse nach einem der Ansprüche 1 bis 10, dadurch gekennzeichnet, daß das Gehäuse (42) des Bremskraft-Regelventils (40) ebenfalls den Bremsmotor enthält.

12. Trommelbremse nach Anspruch 4 in Verbindung mit Anspruch 11, dadurch gekennzeichnet, daß der mechanische Anschlag eine zum Hauptkolben (50) koaxiale Feder (60) aufweist, die einerseits mit dem Hauptkolben (50) und andererseits mit einem vom Gehäuse (42) des Regelventils (40) getragenen ortsfesten Anschlag (64) zusammenwirkt, um eine begrenzte Bewegung des Hauptkolbens (50) aus dem Gehäuse (42) heraus zu ermöglichen und auf diese Weise bei einer Bremsung bei Rückwärtsfahrt den Bremsbacken (14) zu betätigen.

13. Trommelbremse nach Anspruch 12, dadurch gekennzeichnet, daß der Hauptkolben (50) mit der Feder (60) über einen querverlaufenden Stab (56) und ein Ringteil (62) zusammenwirkt, die durch die Feder gegen einen radialen Vorsprung (58) des Gehäuses (42) des Regelventils (40) angedrückt werden, wobei sich der Stab (56) durch eine diametrale Ausnehmung (76) des Hauptkolbens (50) erstreckt, um einen Anschlag für den Hilfskolben (96) zu bilden.

14. Trommelbremse nach einem der Ansprüche 1 bis 10 mit einem Bremsmotor (238), der zwischen zwei benachbarten Enden (228, 230) der beiden Bremsbacken (212, 214) angeordnet ist, und mit einer Verankerungsvorrichtung (320), die zwischen den beiden anderen Enden (220, 222) der Bremsbacken (212, 214) angeordnet ist, dadurch gekennzeichnet, daß die Verankerungsvorrichtung (320) von dem Bremskraft-Regelventil (240) gebildet wird.

15. Trommelbremse nach Anspruch 14 in Verbindung mit Anspruch 3, dadurch gekennzeichnet, daß der Hauptkolben (250) einen Vorsprung (322) aufweist, an dem der andere Bremsbacken (214) angreift.

16. Trommelbremse nach Anspruch 14 in Verbindung mit Anspruch 8, dadurch gekennzeichnet, daß der Hilfskolben (296) bezüglich des Gehäuses (242) des Regelventils (240) mittels eines Stiftes (328) festgelegt ist, der in dem Gehäuse (242) verankert ist und den Hauptkolben (250) durch einen radialen Schlitz (334) durchquert, der sich in axialer Richtung des Hauptkolbens (250) erstreckt, um Verschiebungen desselben bezüglich des festgelegten Gehäuses (242) zu ermöglichen.

17. Trommelbremse nach einem der Ansprüche 3 bis 5, dadurch gekennzeichnet, daß die ersten Betätigungsmittel insbesondere den Hauptkolben (450) umfassen, daß dieser einen Innenkolben (522) und ein Hilfsventil (534) aufweist, von denen der Innenkolben unter der Wirkung des Steuerdrucks entgegen elastischen Mitteln (526) axial verschiebbar ist und das Hilfsventil an dem Kanal angeordnet ist, der die Einlaßöffnung (444) mit der Reaktionkammer (446) verbindet, wobei das Hilfsventil (534) von dem Hilfskolben (522) offengehalten wird, während sich dieser in seiner Ruhestellung befindet.

18. Trommelbremse nach Anspruch 17, dadurch gekennzeichnet, daß das besagte bewegliche Teil der Druckminderkammer (494) von einem Stufenkolben (544) gebildet wird, der im Inneren einer entsprechend abgestuften Bohrung (554, 558) beweglich ist, die das Sperrventil (484) enthält, wobei die zweiten Betätigungsmittel eine Einlaßkammer (521) umfassen, die mit der Einlaßöffnung (444) verbunden ist und dem durchmessergrößeren Abschnitt (552) des Stufenkolbens (544) gebildet wird.

19. Trommelbremse nach Anspruch 18, dadurch gekennzeichnet, daß die ersten Betätigungsmittel ebenfalls einen Steuerkolben (564) umfassen, der in einer Bohrung (566) beweglich und zwischen der Reaktionskammer (446) und der Druckminderkammer (494) angeordnet ist, wobei der Steuerkolben (564) einen anderen beweglichen Abschnitt in der Niederdruckkammer (494) bildet.

20. Trommelbremse nach Anspruch 19, dadurch gekennzeichnet, daß der Steuerkolben (564) einen Durchmesser hat, der kleiner its als der kleine Durchmesser des Stufenkolbens (544), und daß der Steuerkolben (564) und der Stufenkolben (544) bei ihrer Verschiebung zusammenwirken, um eine Volumenänderung der Druckminderkammer (594) sicherzustellen.

21. Trommelbremse nach Anspruch 20, dadurch gekennzeichnet, daß eine Feder (550) in der Einlaßkammer (521) angebracht ist und den Stufenkolben (54) entgegen dem Steuerkolben (564) vorspannt, damit der Stufenkolben (544) in einer Ruhestellung an einer ortsfesten Schulter (546) über einen Stößelträger (548) des Sperrventils (484) anliegt, wobei das letztere in der Ruhestellung von einem Stößel (498) offengehalten wird, der am Stößelträger (548) angebracht ist.

22. Trommelbremse nach Anspruch 21, dadurch gekennzeichnet, daß der Stufenkolben (544) und der Steuerkolben (564) normalerweise mit ihren einander zugeordneten Stirnseiten miteinander in Berührung stehen und daß der Stößelträger (548) in einer diametralen Nut (572) des Steuerkolbens (564) angebracht ist, wobei die diametrale Nut (572) eine solche Tiefe hat, daß der Ruheabstand zwischen dem Stößelträger (548) und dem Boden der Nut (572) größer ist als der axiale Abstand zwischen einem Sitz (536) des Sperrventils (484) und einem beweglichen Element (538) des Ventils (484), wenn sich der Stufenkolben (544) in der Ruhestellung befindet.

23. Trommelbremse nach Anspruch 17, dadurch gekennzeichnet, daß eine Bohrung (474), die im Hauptkolben (450) gebildet ist und den Innenkolben (522) aufnimmt, in Richtung des Bremsbackens (414) verlängert ist, um das Vorspannen des Bremsbackens (414) durch den Innenkolben (522) während einer Bremsung bei Rückwärtsfahrt zu ermöglichen.

24. Trommelbremse nach Anspruch 17, dadurch gekennzeichnet, daß der Bremsmotor (438), der hydraulische Anschlag (448), die Druckminderkammer (494) und die ersten sowie zweiten Betätigungsmittel in einem einzigen festgelegten Gehäuse (442) untergebracht sind.

## FIG_1

FIG_2

FIG_3

2

FIG_4

FIG_5

FIG_6

FIG_7

FIG_8